# EUROPÄISCHE PATENTSCHRIFT

(11) **EP 1 594 255 B1**
(45) Veröffentlichungstag und Bekanntmachung des Hinweises auf die Patenterteilung: **05.09.2007**
(21) Anmeldenummer: 04010715.3
(22) Anmeldetag: 05.05.2004
(51) Int. Cl.: H04L 12/24

(54) **Lastkontrolle in einem TMN System**
Load control in a TMN system
Commande de charge dans un système TMN

(43) Veröffentlichungstag der Anmeldung: 09.11.2005
(73) Patentinhaber: SIEMENS AKTIENGESELLSCHAFT, 80333 München (DE)
(72) Erfinder: Fischbeck, Nils, 18435 Stralsund (DE); Leder, Leslie, 17489 Greifswald (DE); Stuhr, Andreas, 18516 Poggendorf (DE)

(56) Entgegenhaltungen:
- EP-A- 0 977 457
- US-A1- 2003 172 167
- US-B1- 6 304 639

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Physikalisch ist die Funktion NEF üblicherweise in einem Netzelement (NE) angeordnet, während die Funktionen OSF und WSF üblicherweise in einem sogenannten Operations System (OS) realisiert sind. Zwischen NE und OS kann ein Data Communication Networks (DCN) zur Übermittlung von Informationen vorgesehen sein. Die Übermittlung folgt den Prinzipien des Transportdienstes, so wie er in den unteren vier Schichten des ISO/OSI Referenzmodells im internationalen Standard X.200 beschrieben ist.

Die einzelnen TMN Funktionen werden in zeitgemäßen TMN Systemen üblicherweise von funktionsspezifischen Programmen bewirkt. Sie werden von Hardware (z.B. Prozessor, i/o Baugruppe) ausgeführt, die in den Einrichtungen vorgesehen ist. Diese Ausführung wird von Supportsoftware (z.B. Multitasking bzw. Multithreading Betriebssystem, Datenbanksystem, Windows System) unterstützt.

Üblicherweise ist einem OS jeweils eine Vielzahl von NE zugeordnet. Dabei ist das OS meist zentral angeordnet, während die NE in dem Netz dezentral auf eine Vielzahl von Standorten verteilt sind.

Die Leistungsfähigkeit der TMN Funktionen hängt von einer Vielzahl unterschiedlicher Faktoren ab. Sie wird nicht nur durch die Implementierung der funktionsspezifischen Programme bestimmt, sondern auch durch das Zusammenspiel der genannten Systemkomponenten mit den funktionsspezifischen Programmen sowie durch die zeitliche und räumliche Verteilung der Interaktionen und Daten zwischen den unterschiedlichen TMN Funktionen.

So senden beispielsweise die dezentralen NE dem zentralen OS üblicherweise sporadisch Nachrichten über ihren eigenen Zustand. Die mit den Nachrichten übermittelten Informationen werden dann im OS visualisiert und in der Datenbank gespeichert. Bei zu hoher Last aus dem Netz - d.h. mit anderen Worten bei einem zeitlichen Zusammenfallen einer Vielzahl von Nachrichten (auch 'Burst' genannt) - verlangsamt sich jedoch die Verarbeitung im OS so stark, dass keine zeitnahe Bearbeitung durch die Funktion OSF und folglich keine zeitnahe Visualisierung durch die Funktion WSF möglich ist. Derartige Häufungen von Nachrichten treten beispielsweise dann auf, wenn im Netz ein schwerer Fehler auftritt und alle davon betroffenen NE des Netzes zeitgleich Nachrichten an das OS senden, mit denen sie ihre Betroffenheit mitteilen.

Ein Mechanismus zur Abwehr der durch die Nachrichtenfluten bewirkten Systemüberlast sieht einen Historienspeicher vor, der von dem OS für jede Nachricht geführt wird. Dabei wird die Generierung der Nachricht im NE ausgeschaltet, wenn sich eine Nachricht in einem Zeitintervall zu oft wiederholt.

In der Druckschrift US 6,304,639 ist ein Mechanismus zur Lastdimensionierung von virtuellen Pfaden eines von einer zentralen Steuerung kontrollierten Kommunikationsnetzes offenbart, in dem der Netzverkehr auf Verbindungen begrenzter Kapazität übertragen wird, die zwischen den dezentralen Elementen des Kommunikationsnetzes eingerichtet sind. Dazu wird durch einen Computer die Last jedes Pfades mit Hilfe einer Entropiefunktion modelliert und während des Netzbetriebs als Blockierungsmittel genutzt, um so eine Lastbalancierung des Netzverkehrs zwischen den Verbindungen zu bewirken.

Nach dem bislang Ausgeführten wird klar, dass die Umsetzung dieser Architektur in konkrete Lösungen und insbesondere die Realisierung einer Lastabwehr infolge der ausgeprägten Verteiltheit des Systems und der Vielzahl an unterschiedlichen Systemkomponenten und -Anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Nach Erkenntnis der Erfindung wird von dem eingangs genannten Mechanismus zur Lastabwehr nur die syntaktische Identität von Nachrichten berücksichtigt, während die semantische Bedeutung der Nachrichten für den Operator keine Rolle spielt. Daraus ergibt sich das Problem, dass dem Operator für ihn wichtige Nachrichten nicht angezeigt werden, wenn sie zu häufig aufgetreten sind, während unwichtige Nachrichten, die etwas seltener auftreten, weiterhin dargestellt werden. Dieses Verhalten des Systems ist nicht gewünscht.

Auch führt das Ausschalten der Nachrichtengenerierung in den Netzelementen dazu, dass das Ende der Nachrichtenhäufung nicht automatisch erkannt wird, sondern zusätzliche Eingriffe in das Netz erfordern, die ihrerseits das Netz wiederum belasten und zudem zu einer unerwünschten, zeitlichen Verzögerung führen, bis das Netz wieder in vollem Umfang überwacht und gesteuert werden kann.

Eine Lösung für die erfindungsgemäß erkannten Probleme sowie vorteilhafte Ausgestaltungen dieser Lösung sind in den Patentansprüchen angegeben.

Mit dieser Lösung ist eine Vielzahl von Vorteilen verbunden, die im weiteren anhand von Ausführungsbeispielen der Erfindung beschrieben werden.
- Durch entsprechende Klassifikation der Nachrichten kann bei der Lastabwehr die semantische Bedeutung der Nachrichten berücksichtigt werden, indem beispielsweise für den Operator wichtigere Nachrichten einer ersten Klasse und für den Operator weniger wichtiger Nachrichten einer zweiten Klasse zugeordnet werden. Da die Lastabwehr auf einer klassenspezifischen Überlast beruht, kann durch unterschiedliche Kriterien zur Festlegung, ab wann eine klassenspezifische Überlast vorliegt, erreicht werden, dass die Nachrichten der zweiten Klasse bereits bei einer niedrigen spezifischen Last der zweiten Klasse abgewehrt werden und die Nachrichten der ersten Klasse nur bei einer hohen spezifischen Last der ersten Klasse.
   Der Lastabwehrmechanismus geht damit auf die Prioritäten des Operators ein: Die Nachrichten werden nicht nur nach ihrer Häufigkeit von der weiteren Bearbeitung ausgeschlossen, sondern es wird die Bedeutung für die Funktionsfähigkeit des Netzes mit berücksichtigt. Dadurch kann vermieden werden, dass wichtige Nachrichten durch die Lastabwehr für den Operator verloren gehen. Probleme können so schneller behoben werden.
- Infolge der Lastabwehr an der Empfangsstelle der Nachrichten kann auf das im Stand der Technik vorgesehene Ausschalten der Nachrichtengenerierung in den Netzelementen verzichtet werden, so dass die damit verbundenen Probleme entfallen. Dieser Vorteil ist besonders schön, wenn der Durchsatz des OS und nicht der Durchsatz des DCN die den Durchsatz des Gesamtsystems bestimmende Größe ist.
- Durch die Zusammenfassung von mehreren Nachrichten zu Klassen von Nachrichtengruppen wird nicht jede Nachricht isoliert behandelt. Dadurch wird eine Überlastsituation im OS auch dann verhindert, wenn verschiedene Nachrichten zusammen erst die Überlast ergeben, jede einzelne Nachricht aber zu selten käme, um als Überlast erkannt zu werden. Es werden also bisher unerkannte Überlastsituationen verhindert. Dadurch ist die Überwachung des Netzes stabiler und verlässlicher.
- Der vorgenannte Vorteil ist besonders schön und effektiv, wenn Nachrichten von unterschiedlichen Netzelementen in einer gemeinsamen Klassen zusammen gefasst werden.
- Durch Mitteilung von Beginn und/oder Ende der Abwehr bestimmter Nachrichten kann an der Funktion WSF durch entsprechende Darstellung sichergestellt werden, dass dem Operator keine falschen Informationen präsentiert werden. Auch wenn - bedingt durch die Abwehr - die aktuelle Information ggf. nicht vorliegt und somit nicht angezeigt werden kann, so kann doch zumindest die letzte bekannte Information als veraltet, ungültig, o.ä. gekennzeichnet werden.
- Durch Zuordnung der Nachrichten zu den Klassen mit Hilfe eines dynamisch konfigurierbaren Schemas kann die Lastabwehr während des Betriebs des OS sich wandelnden Bedürfnissen und Prioritäten des Operators angepasst werden.
- Ein Realisierung der Überlastabwehr mit Hilfe von Ereignisschlüsseln, statistischen Auftrittshäufigkeiten und einem separaten Monitormodul ist sehr resourcenschonend, weil die Durchführung des Verfahrens keine wiederholte Bearbeitung der Nachrichten selbst erfordert und diskontinuierlich, d.h. mit nur sporadischem Zugriff auf die Hardware und/oder Supportsoftware des OS, bewirkt wird.

Die Erfindung wird im Folgenden anhand von weiteren Ausführungsbeispielen, die auch in den Figuren dargestellt sind, erläutert. Dabei zeigt:
- Figur 1: eine beispielhafte Anordnung der erfindungsgemäßen Überlastabwehr in einem exemplarischen TMN System, umfassend die TMN Funktionen WSF, OSF und NEF, die in physikalischen Einrichtungen OS und NE angeordnet sind
- Figur 2: ein Blockschaltbild einer beispielhaften Realisierung der erfindungsgemäßen Überlastabwehr

Es sei betont, dass die aufgezeigten Ausführungen der Erfindung trotz ihrer teilweise sehr detailgetreuen Darstellung lediglich beispielhafter Natur und nicht einschränkend zu verstehen sind.

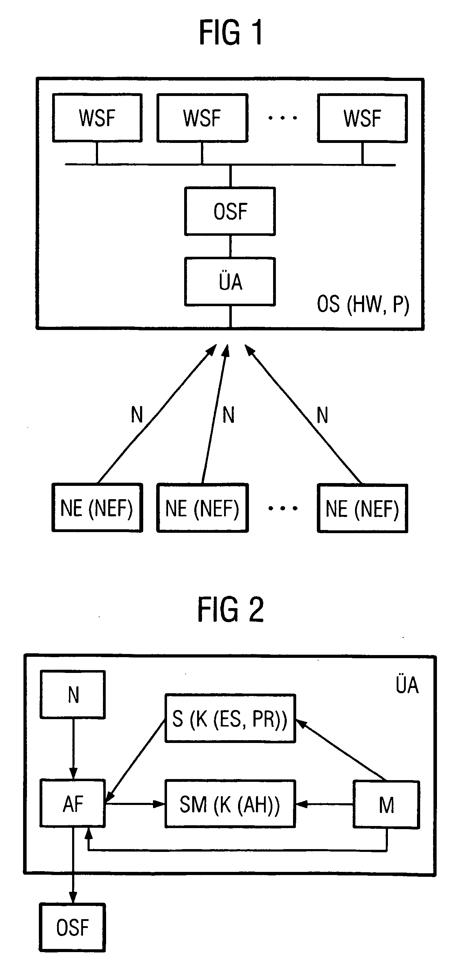

In Figur 1 ist ein TMN System der eingangs beschriebenen Art aufgezeigt. Es umfasst die Funktionsblöcke Operations Systems Function OSF und Workstation Function WSF sowie die erfindungsgemäße Überlastabwehr ÜA, die zentral in einem als Operations System OS ausgebildeten Erzeugnis sowie eine Vielzahl von Funktionsblöcken NEF, die dezentral in als Netzelemente NE ausgebildeten Erzeugnissen angeordnet sind. Die Erzeugnisse umfassen Hardware HW zur Durchführung von Computerprogrammprodukten P, mit denen die Funktionen realisiert sind. Mit Hilfe von Pfeilen wird angedeutet, dass von den Netzelementen NE Nachrichten N an das Operations System OS gesendet werden.

In Figur 2 ist eine Realisierung der Überlastabwehr ÜA in einem Blockschaltbild dargestellt. Diese Realisierung zur Abwehr des Operations System Function OSF durch Nachrichten N umfasst einen ein Schema S, einen Adapter/Filter AF, ein Statistikmodul bzw. eine Statistik SM und einen Monitor M. Die erfindungsgemäße Überlastabwehr wird in dieser Ausführung der Erfindung ereignisgesteuert bewirkt, wobei empfangene Nachrichten N als Ereignisse interpretiert werden:

Im Schema S wird die Gruppierung bzw. Bildung von Klassen K der Ereignisse für die Berechnung von Ereignisschlüsseln ES festgelegt. Weiterhin enthält es Prioritäten PR. Gruppierung und Priorität sind dynamisch änderbar, das Schema S im Operations System OS somit konfigurierbar.

Der Adapter/Filter AF ist zwischen den Nachrichten N und der Operations System Function OSF angeordnet. Einem Ereignis wird mittels des Schemas S eine als systemweit eindeutiger Ereignisschlüssel ES ausgebildete Identifikation und eine Priorität PR zugewiesen, wodurch die Zuordnung zu einer Klasse K bewirkt wird. Das Ereignis wird durch seinen Schlüssel ES identifiziert. Die Identifikation kann für verschiedene Nachrichten N gleich sein, und zwar auch dann, wenn sie von verschiedenen Objekten innerhalb eines Netzelementes NE oder von unterschiedlichen Netzelementen NE kommen. Nachrichten N bilden entsprechend ihrer Identifikation eine Nachrichtengruppe bzw. Klasse K. Durch die Priorität PR wird festgelegt, wie wichtig die Nachricht N für den Betreiber ist. Das Ereignis wird an das Statistikmodul SM weitergeleitet.

Im Statistikmodul SM wird das Ereignis registriert und es wird ihm mittels Zeitmessung eine Auftrittshäufigkeit AH zugewiesen. Eintreffende Nachrichten N werden auf diese Weise nach Priorität PR und Identifikation in der Statistik SM gezählt.

Der Monitor M wertet die im Statistikmodul SM aufgelaufenen Daten aus. Dazu überprüft er in bestimmten Zeitintervallen die Statistik SM und meldet nach konfigurierbaren Regeln eine Überlast für eine Nachrichtgruppe. Im Falle einer Überlast werden Nachrichten N aus dieser Gruppe innerhalb des Operations System OS nicht weitergegeben. Die Nachrichtengruppe wird blockiert und das Operations System OS wird von diesen Nachrichten N im weiteren nicht belastet. Es wird jedoch nicht versucht, die Generierung der Nachrichten N in den Netzelementen NE zu unterdrücken. So kann auch für blockierte Nachrichtengruppen regelmäßig überprüft werden, ob die Überlast noch zutrifft. Wenn dies nicht mehr der Fall ist, wird die Verarbeitung wieder zugelassen.

Das Monitoring kann über verschiedene Mechanismen ausgelöst werden (bspw. Polling oder Push). In Abhängigkeit von der Häufigkeit AH und den Prioritäten PR werden die Datensätze im Statistikmodul SM verschieden behandelt. Wenn der Schwellwert zu gering ist wird der Datensatz gelöscht. Kann man noch keine Aussage über die Auswirkungen machen, steht das Ereignis unter Beobachtung und der Datensatz wird mit jedem neuen Ereignis aktualisiert. Ist die Häufigkeit AH zu hoch, dann werden die damit zusammenhängenden Ereignisse blockiert. Sinkt die Häufigkeit AH wieder unter den Schwellwert ab, dann hört die Blockierung auf und das Ereignis wird lediglich beobachtet.

Im Folgenden wird ein Ausführungsbeispiel der Erfindung erläutert, bei dem Ereignisse mit gleicher Häufigkeit AH aber unterschiedlicher Priorität PR auftreten.

Im Netz treten die Ereignisse vom Typ A und vom Typ B mit etwa gleich hoher Häufigkeit AH auf. Das Ereignis A hat eine Auftrittshäufigkeit von 13 pro Sekunde, das Ereignis B von 12 pro Sekunde. Diese werden im Operations System OS empfangen. Mittels des Schemas S werden im Adaptermodul AF die Schlüssel ES_{A} für das Ereignis A und ES_{B} für das Ereignis B generiert. Dem Ereignis A ist eine hohe Priorität (z.B. mit einem Wert 4) und dem Ereignis B ist eine niedrige Priorität (z.B. mit einem Wert 2) zugeordnet.

In dem Statistikmodul SM werden die Ereignisschlüssel ES mit den zugehörigen Prioritäten PR registriert. Für jedes Ereignis wird eine Auftrittshäufigkeit AH in einem einzeln Datensatz gespeichert.

Das Monitormodul M wertet die Auftrittshäufigkeiten AH für die Ereignisse aus und entscheidet anhand eines Schemas, ob ein Ereignis blockiert wird. In diesem Beispiel sei für Priorität 4 eine Häufigkeitsschwelle 15 gültig. Das Ereignis A wird in dem Operations System OS weitergeleitet, da 13 unter dieser Schwelle liegt. Für Priorität 2 ist die Schwelle 10. Somit wird das Ereignis B blockiert. Es wird außerdem in dem Operations System OS mitgeteilt, das Ereignis B jetzt nicht mehr verarbeitet wird.

In alternativen Ausführungsbeispielen der Erfindung ist dargestellt, wie mit Hilfe der Erfindung mehrere Ereignisse von unterschiedlichen Quellen zusammen in Abhängigkeit von der Konfiguration des Schemas S eine Überlast ergeben oder nicht.

Es sei davon ausgegangen, dass am Operations System OS Ereignisse von zehn verschiedenen Quellen innerhalb eines Netzelementes NE mit etwa gleich hoher Häufigkeit 5 und Priorität 3 auftreten. Das Schema S sei so konfiguriert, dass im Adaptermodul AF zehn unterschiedliche, eindeutige Ereignisschlüssel ES generiert werden. Für Priorität 3 ist im Schema S der Schwellwert 15 registriert. Die Ereignisse werden folglich nicht blockiert, da der Schwellwert für jedes einzelne Ereignis nicht überschritten wird.

Alternativ sei in dem Schema S die Zuordnung der Ereignisschlüssel ES so konfiguriert, dass für die zehn Quellen derselbe Schlüssel ES errechnet wird. Als Folge werden für die Ereignisse identische, eindeutige Ereignisschlüssel ES generiert. Im Statistikmodul SM wird daraufhin ein Auftrittshäufigkeit AH von 50 berechnet. Dadurch wird die Schwelle von 15 überschritten und alle Ereignisse werden blockiert, da sie über 15 liegen.

Abschließend sei darauf hingewiesen, dass die Beschreibung der für die Erfindung relevanten Komponenten des TMN Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass alle Funktionseinheiten teilweise oder vollständig in Software / Computerprogrammprodukten und/oder über mehrere physikalische Einrichtungen verteilt realisiert werden können.

## Patentansprüche

1. Verfahren zur Abwehr einer Überlast einer zentralen Steuerung (OS), beispielsweise eines Operations Systems eines Telecommunications Management Network Systems,
- mit einer Vielzahl von dezentralen Elementen (NE), die der Steuerung zugeordnet sind,
- mit Nachrichten (N), die von den Elementen an die Steuerung gesendet werden,
- mit einer Mehrzahl von Klassen (K), denen empfangene Nachrichten zugeordnet werden können,
mit folgenden Schritten:
- Empfang der Nachrichten,
- Zuordnung der Nachrichten zu den Klassen,
- Ermittlung von klassenspezifischen Lasten, die durch die jeweils zugeordneten Nachrichten hervorgerufen werden,
- Abwehr der Nachrichten, die einer Klasse mit einer die Steuerung überlastenden, klassenspezifischen Last zugeordnet werden.

2. Verfahren nach dem vorstehenden Anspruch,
bei dem die Nachrichten durch Blockade von deren Weiterleitung innerhalb der Steuerung abgewehrt werden.

3. Verfahren nach einem der vorstehenden Ansprüche,
bei dem innerhalb der Steuerung Beginn und/oder Ende der Abwehr von Nachrichtenklassen mitgeteilt wird.

4. Verfahren nach einem der vorstehenden Ansprüche,
bei dem Nachrichten von unterschiedlichen Elementen derselben Klasse zugeordnet werden.

5. Verfahren nach einem der vorstehenden Ansprüche,
bei dem die Nachrichten mit Hilfe von Ereignisschlüsseln (ES) zugeordnet werden, die bei Empfang der Nachrichten unter Berücksichtigung eines dynamisch konfigurierbaren Schemas (S) gebildet werden.

6. Verfahren nach dem vorstehenden Anspruch,
bei dem die klassenspezifischen Lasten mit Hilfe von statistischen Auftritthäufigkeiten (AH) ermittelt werden, die unter Berücksichtigung der Ereignisschlüssel gebildet werden.

7. Verfahren nach dem vorstehenden Anspruch,
bei dem die Auftrittshäufigkeiten von einem Monitor (M) bewertet werden, wobei die Bewertung diskontinuierlich - insbesondere periodisch und/oder ereignisgesteuert - durchgeführt wird.

8. Verfahren nach einem der vorstehenden Ansprüche,
bei dem die überlastende, klassenspezifische Last von einer Priorität (PR) der Klasse abhängt.

9. Produkt - insbesondere als Operations System eines TMN System ausgebildete zentrale Steuerung (OS), Überlastabwehr (ÜA), Statistikmodul (SM), Monitor (M) oder Adapter/Filter (AF) -, umfassend Mittel, die so eingerichtet sind, dass ein Verfahren nach einem der vorstehenden Verfahrensansprüche durchgeführt wird, wenn das Produkt erfindungsgemäß genutzt wird.

10. Produkt nach einem der vorstehenden Verfahrensansprüche, ausgebildet als Computerprogrammprodukt (P), dessen Mittel als Programmcode ausgebildet und so eingerichtet sind, dass das Verfahren durchgeführt wird, wenn der Programmcode in einen Arbeitsspeicher geladen und von zumindest einem Prozessor ausgeführt wird.

11. Produkt, umfassend Mittel, die so eingerichtet sind, dass durch das Produkt ein Verfahren nach einem der vorstehenden Verfahrensansprüche teilweise durchgeführt wird und dabei in Folge einer durch diese Durchführung bedingten Zusammenwirkung mit zumindest einem weiteren Produkt, das zur Durchführung des restlichen Verfahrens eingerichtet ist, das gesamte Verfahren durchgeführt wird.

## Claims

1. Method for preventing an overload of a central controller (OS), for example an operations system of a telecommunications management network system,
- having a plurality of decentralised elements (NE) which are assigned to the controller,
- having messages (N) which are sent by the elements to the controller,
- having a plurality of classes (K) to which received messages can be assigned,
comprising the following steps:
- receiving the messages,
- assigning the messages to the classes,
- determining class-specific loads that are caused by the messages assigned in each case, and
- blocking the messages which are assigned to a class having a class-specific load that is overloading the controller.

2. Method according to the preceding claim,
wherein the messages are prevented from being forwarded within the controller by means of a blockade.

3. Method according to one of the preceding claims,
wherein the beginning and/or end of the blocking of message classes is reported within the controller.

4. Method according to one of the preceding claims,
wherein messages from different elements are assigned to the same class.

5. Method according to one of the preceding claims,
wherein the messages are assigned with the aid of event keys (ES) which are formed when the messages are received, taking into account a dynamically configurable scheme (S).

6. Method according to the preceding claim,
wherein the class-specific loads are determined with the aid of statistical occurrence frequencies (AH) which are formed taking into account the event keys.

7. Method according to the preceding claim,
wherein the occurrence frequencies are evaluated by a monitor (M), the evaluation being performed discontinuously, in particular periodically and/or in an event-driven manner.

8. Method according to one of the preceding claims,
wherein the overloading, class-specific load is dependent on a priority (PR) of the class.

9. Product, in particular a central controller (OS) embodied as an operations system of a TMN system, load blocking mechanism (ÜA), statistics module (SM), monitor (M) or adapter/filter (AF), comprising means which are configured in such a way that a method according to one of the preceding method claims is performed when the product is used according to the invention.

10. Product according to one of the preceding method claims, embodied as a computer program product (P) whose means are embodied as program code and configured in such a way that the method is performed when the program code is loaded into a working memory and executed by at least one processor.

11. Product comprising means which are configured in such a way that a method according to one of the preceding method claims is performed in part by the product and in the process, as a result of an interaction, induced by said performance, with at least one further product which is configured for performing the remainder of the method, the entire method is performed.

## Revendications

1. Procédé de protection contre une surcharge d'une commande centralisée (OS), par exemple d'un système d'exploitation d'un système TMN (Telecommunications Management Network),
- avec une pluralité d'éléments décentralisés (NE) attribués à ladite commande,
- avec des messages (N) envoyés par lesdits éléments à ladite commande,
- avec une pluralité de classes (K) susceptibles de se voir attribuer des messages reçus,
comprenant les étapes suivantes :
- réception des messages,
- attribution des messages aux classes,
- détermination des charges spécifiques à une classe, provoquées par les messages respectifs attribués,
- protection contre les messages destinés à être attribués à une classe avec une charge spécifique à ladite classe surchargeant la commande.

2. Procédé selon la revendication précédente,
dans lequel les messages sont contrés par blocage de leur transmission au sein de la commande.

3. Procédé selon l'une des revendications précédentes,
dans lequel le début et/ou la fin de la protection contre les classes de messages sont signalés au sein de la commande.

4. Procédé selon l'une des revendications précédentes,
dans lequel les messages d'éléments différents sont attribués à la même classe.

5. Procédé selon l'une des revendications précédentes,
dans lequel les messages sont attribués à l'aide de codes d'événements (ES) formés à la réception des messages en tenant compte d'un schéma (S) configurable dynamiquement.

6. Procédé selon la revendication précédente,
dans lequel les charges spécifiques à une classe sont déterminées à l'aide de fréquences d'occurrence statistiques (AH) formées en tenant compte desdits codes d'événements.

7. Procédé selon la revendication précédente,
dans lequel les fréquences d'occurrence sont évaluées par un moniteur (M), l'évaluation étant effectuée de manière discontinue, en particulier périodiquement et/ou en fonction des événements.

8. Procédé selon l'une des revendications précédentes,
dans lequel la charge spécifique à une classe et constituant une surcharge dépend d'une priorité (PR) de la classe.

9. Produit - en particulier commande centralisée (OS) conçue comme système d'exploitation d'un système TMN, protection contre la surcharge (ÜA), module statistique (SM), moniteur (M) ou adaptateur/filtre (AF) - comprenant des moyens qui sont configurés de manière à réaliser un procédé selon l'une des revendications de procédé précédentes si le produit est utilisé conformément à l'invention.

10. Produit selon l'une des revendications de procédé précédentes, conçu comme produit programme d'ordinateur P, dont les moyens sont conçus comme code programme et configurés de manière à réaliser le procédé lorsque le code programme est chargé dans une mémoire de travail et exécuté par au moins un processeur.

11. Produit, comprenant des moyens configurés de telle manière que ledit produit permet de réaliser une partie du procédé selon l'une des revendications de procédé précédentes et que suite à une interaction conditionnée par cette réalisation avec au moins un autre produit lequel est configuré pour réaliser le reste du procédé, l'ensemble du procédé est réalisé.
